# EUROPÄISCHE PATENTSCHRIFT

(11) **EP 0 553 407 B1**
(45) Veröffentlichungstag und Bekanntmachung des Hinweises auf die Patenterteilung: **25.01.1995**
(21) Anmeldenummer: 92118940.3
(22) Anmeldetag: 05.11.1992
(51) Int. Cl.: B27K 5/02, C09D 15/00

(54) **Verfahren zum Färben von Holzfurnieren**
Method for dyeing wood veneer
Procédé de teinture des feuilles de plaçage de bois

(30) Priorität: 16.11.1991 DE 4137851
(43) Veröffentlichungstag der Anmeldung: 04.08.1993
(73) Patentinhaber: BASF Aktiengesellschaft, 67063 Ludwigshafen (DE)
(72) Erfinder: Vamvakaris, Christos, Dr., W-6701 Kallstadt (DE)

(56) Entgegenhaltungen:
- DE-A- 1 901 255
- DE-A- 2 049 455
- GB-A- 1 356 121
- US-A- 2 111 494
- US-A- 2 391 613
- US-A- 4 063 882
- DATABASE WPIL, Week 9214, 30. Juni 1991, Derwent Publications Ltd., London, GB; AN 92-112097; & SU-A-1 659 195

## Beschreibung

Die vorliegende Erfindung betrifft ein neues Verfahren zum Färben von Holzfurnieren mittels Azofarbstoffen.

Es ist in der Praxis üblich, Holzfurniere z.B. mit alkoholischen Lösungen von anionischen Azofarbstoffen, die gegebenenfalls in Form der 1:1- oder 1:2-Metallkomplexe vorliegen, zu färben. Es hat sich jedoch gezeigt, daß man bei dieser Arbeitsweise zu Ausfärbungen gelangt, die über unzureichende Lichtechtheit und ungenügende Durchfärbung verfügen.

Zur Erhöhung der Lichtechtheit soll gemäß der Lehre der älteren Patentanmeldung EP-A-479 075 die Färbung in Gegenwart von UV-Stabilisatoren vorgenommen werden.

Das Dokument GB-A-1 356 121 benützt eine konzentrierte saure Lösung von Azofarbstoffen mit Sulfonsäuregruppen, um Papier und Textilien zu färben.

Aufgabe der vorliegenden Erfindung war es, ein neues Verfahren zum Färben von Holzfurnieren bereitzustellen, bei dem die Holzfurniere eine gute Durchfärbung und gute Lichtechtheit aufweisen.

Es wurde nun gefunden, daß das Färben von Holzfurnieren mittels Azofarbstoffen vorteilhaft gelingt, wenn man die Holzfurniere mit einer essigsauren Lösung, enthaltend einen oder mehrere Azofarbstoffe, jeweils in Form eines 1:1- oder 1:2-Metallkomplexes, bei einer Temperatur von 40 bis 120°C behandelt.

Für das erfindungsgemäße Verfahren geeignete Azofarbstoffe sind Mono- oder Disazofarbstoffe, wobei Monoazofarbstoffe bevorzugt sind, die jeweils in Form ihrer Metallkomplexe vorliegen. Als komplexierende Metalle kommen insbesondere Kupfer, Kobalt, Chrom, Nickel oder Eisen in Betracht, wobei Kupfer, Kobalt oder Chrom bevorzugt sind. Besonders hervorzuheben sind 1:1- oder 1:2-Chromkomplexe.

In den Komplexen befinden sich die metallisierten Gruppen vorzugsweise jeweils in ortho-Stellung zur Azogruppe, z.B. in Form von o,o'-Dihydroxy-, o-Hydroxy-o'-carboxy-, o-Carboxy-o'-amino- oder o-Hydroxy-o'amino-azogruppierungen. Die Azofarbstoffe können dabei Hydroxysulfonyl - und/oder Carboxylgruppen aufweisen.

Wenn Hydroxysulfonyl - und/oder Carboxylgruppen im Farbstoffmolekül vorhanden sind, wird wäßrige Essigsäure, die bis zu 10 Gew.-% Essigsäure enthält, zur Herstellung der essigsauren Farbstofflösungen verwendet. In allen anderen Fällen verwendet man Eisessig für die Herstellung der essigsauren Farbstofflösung.

Als besonders geeignete Chromophore sind z.B. C.I. Solvent Yellow 19 (13 900:1), C.I. Solvent Yellow 21 (18 690), C.I. Solvent Yellow 32 (48 045), C.I. Solvent Yellow 79, C.I. Solvent Yellow 81, C.I. Solvent Orange 5 (18 745:1), C.I. Solvent Orange 6 (18 736:1), C.I. Solvent Orange 45 (11 700), C.I. Solvent Orange 54, C.I. Solvent Orange 56, C.I. Solvent Orange 99, C.I. Solvent Red 35, C.I. Solvent Red 109, C.I. Solvent Red 118, C.I. Solvent Red 119, C.I. Solvent Red 122, C.I. Solvent Red 160, C.I. Solvent Red 225, C.I. Solvent Black 27, C.I. Solvent Black 35, C.I. Solvent Black 47, C.I. Acid Yellow 158:1, C.I. Acid Yellow 204, C.I. Acid Orange 142, C.I. Acid Red 183 (18 800), C.I. Acid Red 186 (18 810), C.I. Acid Red 296 (15 675), C.I. Acid Red 357, C.I. Acid Red 362, C.I. Acid Blue 158 (14 880), C.I. Acid Blue 185, C.I. Acid Blue 193 (15 707), C.I. Acid Blue 209, C.I. Acid Blue 342, C.I. Acid Brown 365, C.I. Acid Violet 90 (18 762) oder C.I. Acid Black 194 zu nennen.

In der Regel wird die Behandlung der Holzfurniere mit einer essigsauren Lösung durchgeführt, die 0,1 bis 100 Gew.-%, vorzugsweise 0,5 bis 50 Gew.-%, jeweils bezogen auf das Gewicht der Lösung, eines oder mehrerer Azofarbstoffe enthält.

Die essigsauren Lösungen der Azofarbstoffe können weiterhin geringe Mengen an Zusatzstoffen, die in Holzbeizen üblich sind, enthalten. Solche Zusatzstoffe sind z.B. Bindemittel, Fungizide, Stabilisatoren oder Tenside.

Holzfurniere im erfindungsgemäßen Sinne sind Holzblätter mit ausgedehnter Oberfläche, deren Dicke in der Regel 0,5 bis 10 mm beträgt. Sperrholz oder Schichtholz ist dabei mitumfaßt.

Als Holzsorten kommen alle üblichen Hölzer, wie Kiefer, Fichte, Tanne, Eiche, Esche, Buche, Ahorn, Nußbaum, Birnbaum, Teakholz, Mahagoni, Kastanie, Birke, Lärche, Haselnuß, Linde, Weide, Pappel, Ulme, Föhre, Platane, oder Espe in Betracht.

Das erfindungsgemäße Verfahren wird zweckmäßig so durchgeführt, daß das Holzfurnier in die essigsaure Lösung des Chromophors getaucht und bei einer Temperatur von 40 bis 120°C, vorzugsweise 60 bis 120°C, über einen Zeitraum von 1 bis 8 Stunden behandelt wird.

Nach Beendigung der Behandlung können die Holzfurniere in der Regel mit Wasser gewaschen und an der Luft bei Raumtemperatur oder aber auch bei erhöhter Temperatur (ca. 60 bis 100°C), z.B. in einem Umluft-Trockenschrank getrocknet werden.

Der Waschprozeß findet üblicherweise durch Eintauchen der Holzfurniere in Wasser statt. Er kann auch in Gegenwart einer Base, z.B. wäßrige Lauge, wie verdünnte Natron - oder Kalilauge, erfolgen, um so anhaftende freie Essigsäure in Natrium- oder Kaliumacetat überzuführen. Damit wird eine Geruchsbildung ausgeschlossen.

Die mittels des erfindungsgemäßen Verfahrens gefärbten Holzfurniere zeichnen sich durch gute Lichtechtheitswerte aus. Außerdem wird bei Anwendung des neuen Verfahrens eine gute Durchfärbung der Holzfurniere erreicht.

Die folgenden Beispiele sollen die Erfindung näher erläutern.

### Verfahrensweise 1

Es wurde ein Lösung des Farbstoffs in Essigsäure hergestellt, die eine Farbstoffkonzentration von 2 g/l aufwies. In diese Lösung wurden Furnierstücke getaucht und 3 Stunden bei Rückflußtemperatur (ca. 120°C) behandelt. Danach wurden die Holzfurniere in Wasser gegeben, wobei der pH-Wert durch Zugabe von verdünnter Natronlauge auf 7 gestellt wurde. Dann erfolgte die Trocknung bei 80°C.

Verfahrensweise 1 wurde mit folgenden Farbstoffen durchgeführt:

| Beispiel Nr. | verwendeter Farbstoff |
|---|---|
| 1 | C.I. Solvent Yellow 79 |
| 2 | C.I. Solvent Yellow 32 (48045) |
| 3 | C.I. Solvent Yellow 19 (13900:1) |
| 4 | C.I. Solvent Yellow 82 |
| 5 | C.I. Solvent Red 122 |
| 6 | C.I. Solvent Black 35 |
| 7 | C.I. Solvent Black 47 |
| 8 | C.I. Solvent Black 27 |

### Verfahrensweise 2

2 g Farbstoff wurden in 1 l Wasser unter Zusatz von 0,5 Gew.-% einer Mischung eines ionischen und nichtionischen Tensids, bezogen auf das Gewicht des Wassers, gegeben. Durch Zugabe von 30 gew. -%iger Essigsäure bis pH 4 wurde die Lösung des Farbstoffs bewirkt. In diese Lösung wurden Furnierstücke getaucht und 8 Stunden bei 100°C behandelt. Dann wurden die Holzfurniere in Wasser gegeben, wobei der pH-Wert durch Zugabe von verdünnter Natronlauge auf 7 gestellt wurde. Danach erfolgte die Trocknung bei 80°C.

### Verfahrensweise 3

2 g Farbstoff wurden in 1 l Wasser unter Zusatz von 2 Gew.-% Eisessig, bezogen auf das Gewicht des Wassers, gelöst. In diese Lösung wurden Furnierstücke getaucht und 8 Stunden bei 100°C behandelt. Danach wurden die Holzfurniere in Wasser gegeben, wobei der pH-Wert durch Zugabe von verdünnter Natronlauge auf 7 gestellt wurde. Dann erfolgte die Trocknung bei 80°C.

Verfahrensweise 2 und 3 wurde jeweils mit folgenden Farbstoffen durchgeführt:

| Beispiel Nr. | verwendeter Farbstoff | Verfahrensweise |
|---|---|---|
| 9 | C.I. Acid Blue 342 | 2 |
| 10 | C.I. Acid Blue 209 | 3 |
| 11 | C.I. Acid Brown 365 | 2 |
| 12 | C.I. Acid Yellow 158:1 | 2 |
| 13 | Mischung aus | 3 |
| | C.I. Acid Red 183 (18 800) und | |
| | C.I. Acid Red 186 (18 810) | |
| 14 | C.I. Acid Yellow 204 | 2 |
| 15 | C.I. Acid Red 296 (15 675 | 3 |

Mit allen Farbstoffen wurden in allen Verfahrensweisen Färbungen erzielt, die eine gute Lichtechtheit aufweisen. Die Durchfärbung der Furnierstücke war ebenfalls in allen Fällen gut.

## Patentansprüche

1. Verfahren zum Färben von Holzfurnieren mittels Azofarbstoffen, dadurch gekennzeichnet, daß man die Holzfurniere mit einer essigsauren Lösung, enthaltend einen oder mehrere Azofarbstoffe, jeweils in Form eines 1:1- oder 1:2-Metallkomplexes, bei einer Temperatur von 40 bis 120°C behandelt.

2. Verfahren nach Anspruch 1, dadurch gekennzeichnet, daß man die Behandlung mit einer essigsauren Lösung durchführt, die 0,1 bis 100 Gew.-%, bezogen auf das Gewicht der Lösung, eines oder mehrerer Azofarbstoffe enthält.

3. Verfahren nach Anspruch 1, dadurch gekennzeichnet, daß man die Behandlung bei einer Temperatur von 60 bis 120°C durchführt.

4. Verfahren nach Anspruch 1, dadurch gekennzeichnet, daß man die Behandlung mit Azofarbstoffen vornimmt, die in Form des 1:1- oder 1:2-Chromkomplexes vorliegen.

## Claims

1. A process for coloring a wood veneer by means of azo dyes, wherein the wood veneer is treated with an acetic acid solution containing one or more azo dyes, each in the form of a 1:1 or 1:2 metal complex, at from 40 to 120°C.

2. A process as claimed in claim 1, wherein the treatment is carried out using an acetic acid solution which contains from 0.1 to 100% by weight, based on the weight of the solution, of one or more azo dyes.

3. A process as claimed in claim 1, wherein the treatment is carried out at from 60 to 120°C.

4. A process as claimed in claim 1, wherein the treatment is carried out using azo dyes which are in the form of the 1:1 or 1:2 chromium complex.

## Revendications

1. Procédé pour la coloration de placages de bois au moyen de colorants azoïques, caractérisé en ce qu'on traite les placages de bois avec une solution d'acide acétique contenant un ou plusieurs colorants azoïques, chacun sous la forme d'un complexe métallifère 1:1 ou 1:2, à une température comprise entre 40 et 120°C.

2. Procédé selon la revendication 1, caractérisé en ce qu'on effectue le traitement avec une solution d'acide acétique qui contient 0,1 à 100% en poids, par rapport au poids de la solution, d'un ou de plusieurs colorants azoïques.

3. Procédé selon la revendication 1, caractérisé en ce qu'on effectue le traitement à une température comprise entre 60 et 120°C.

4. Procédé selon la revendication 1, caractérisé en ce qu'on procède au traitement avec des colorants azoïques qui sont présents sous la forme de complexe au chrome 1:1 ou 1:2.
